# FASCICULE DE BREVET EUROPEEN

(11) **EP 1 604 774 B1**
(45) Date de publication et mention de la délivrance du brevet: **20.02.2008**
(21) Numéro de dépôt: 04102660.0
(22) Date de dépôt: 11.06.2004
(51) Int. Cl.: B23Q 3/12, B23Q 7/04, B25B 5/06, B25B 5/14, B23B 31/16

(54) **Pince actionnée par un organe piézoélectrique**
Piezoelektrisch aktivierbare Spannzange
Piezoelectrically actuated chuck

(43) Date de publication de la demande: 14.12.2005
(73) Titulaire: TORNOS S.A., 2740 Moutier (CH)
(72) Inventeur: Paroz, Cédric, 2732 Saicourt (CH)
(74) Mandataire: BOVARD AG

(56) Documents cités:
- EP-A- 1 396 301
- DE-A- 3 929 010

## Description

L'invention se rapporte à un dispositif de maintien d'un élément à usiner, telle une barre de matériau, dans une broche de machine outil.

L'invention concerne les dispositifs de maintien de type dit à pince.

L'invention se rapporte également aux machines outils équipées du dispositif de maintien précité.

Dans le domaine des machines outils permettant la réalisation de pièces par décolletage dans une barre de matériau, il est nécessaire de maintenir fermement l'une des extrémités de la barre de matériau dans une partie tournante dite broche.

Par barre de matériau, dans la présente demande, on désigne tout élément rigide d'une certaine longueur, quelle que soit cette longueur, comportant une surface périphérique, dite première surface périphérique qui définit la section transversale de cette barre.

Une broche comprend généralement, une première partie substantiellement tubulaire ainsi que des moyens de guidage en rotation et d'entraînement en rotation de cette première partie substantiellement tubulaire autour de son axe longitudinal, et ce, par rapport à un support, tel une partie d'un bâti d'une machine outil que la broche équipe.

Chaque broche abrite généralement un dispositif de maintien de la barre par serrage contre la surface périphérique dite première surface périphérique, ce dispositif de maintien étant constitué :
- d'une deuxième partie substantiellement tubulaire qui constitue une pince, et
   . d'une part, comporte une surface périphérique, dite deuxième surface périphérique, définissant la section transversale de cette deuxième partie substantiellement tubulaire et une première surface interne définissant un canal axial de section transversale sensiblement égale à la section transversale de la barre de matériau à usiner, et,
   . d'autre part, est radialement déformable, notamment de manière élastique,
- d'un appareil d'actionnement, de type commandé, conçu pour, par utilisation d'une énergie d'actionnement qui est fournie par un dispositif de commande situé à l'extérieur de la première partie substantiellement tubulaire de la broche et est transmise à l'intérieur de cette première partie substantiellement tubulaire, pour engendrer une contraction radiale ou supprimer une contraction radiale de la deuxième partie substantiellement tubulaire de manière à provoquer le serrage de cette dernière contre la première surface périphérique d'une barre de matériau qui la traverse, ou au contraire le desserrage de cette deuxième partie substantiellement tubulaire.

L'appareil d'actionnement doit permettre le serrage et le desserrage de la barre quel que soit l'état de rotation de la barre, c'est-à-dire que la barre soit immobile ou qu'elle soit entraînée en rotation.

Une difficulté réside dans la transmission d'une énergie d'actionnement de l'extérieur de la broche vers l'intérieur de la broche.

L'appareil d'actionnement doit également assurer un serrage énergique sur la barre.

L'état de la technique comprend de très nombreux types appareils d'actionnement de type à chiens ou à vérin, c'est-à-dire des appareils qui mettent en oeuvre de l'énergie mécanique transmise soit mécaniquement soit par un fluide, tel un fluide pneumatique ou hydraulique par ailleurs produite dans un dispositif de commande.

Lorsqu'on souhaite qu'ils soient puissants et fiables, ces appareils sont relativement complexes et onéreux à fabriquer et ils pénalisent la dynamique par leur grande inertie.

L'état de la technique EP-A-1396301 comprend cependant un dispositif de maintien selon le préambule de la revendication 1 qui vise à remédier aux problèmes précités.

Dans ce dispositif de maintien, l'appareil d'actionnement,
- d'une part consiste en un organe piézoélectrique qui, par l'effet d'un courant électrique issu d'un dispositif de commande, peut-être placé dans au moins l'un des deux états que sont un état de repos, dit premier état, dans lequel il occupe un premier volume déterminé et un état excité, dit deuxième état, dans lequel il occupe un deuxième volume supérieur audit premier volume, et
- d'autre part, est situé dans la première partie substantiellement tubulaire de la broche et disposé autour de la deuxième partie substantiellement tubulaire de broche de manière telle que :
   .. lorsqu'il occupe le premier volume, il contraint au moins localement la deuxième partie substantiellement tubulaire de la broche et induit son application vers la première surface périphérique d'une barre qui le traverse, tandis que
   ..lorsqu'il occupe le deuxième volume, il ne contraint pas la deuxième partie substantiellement tubulaire et relâche l'application de la deuxième partie substantiellement tubulaire de la broche, vers la première surface périphérique d'une barre qui le traverse.

Ce dispositif fonctionne en théorie, mais en pratique, du fait de sa mobilité en rotation, pose le problème de la commande et/ou de l'alimentation en énergie de son appareil d'actionnement.

Un résultat que l'invention vise à obtenir est un dispositif du type précité dont les particularités techniques permettent de surmonter le problème de commande et d'alimentation en énergie.

A cet effet, l'invention a pour objet un dispositif de maintien selon la revendication 1.

L'invention se rapporte également aux machines outils équipées du dispositif de maintien précité.

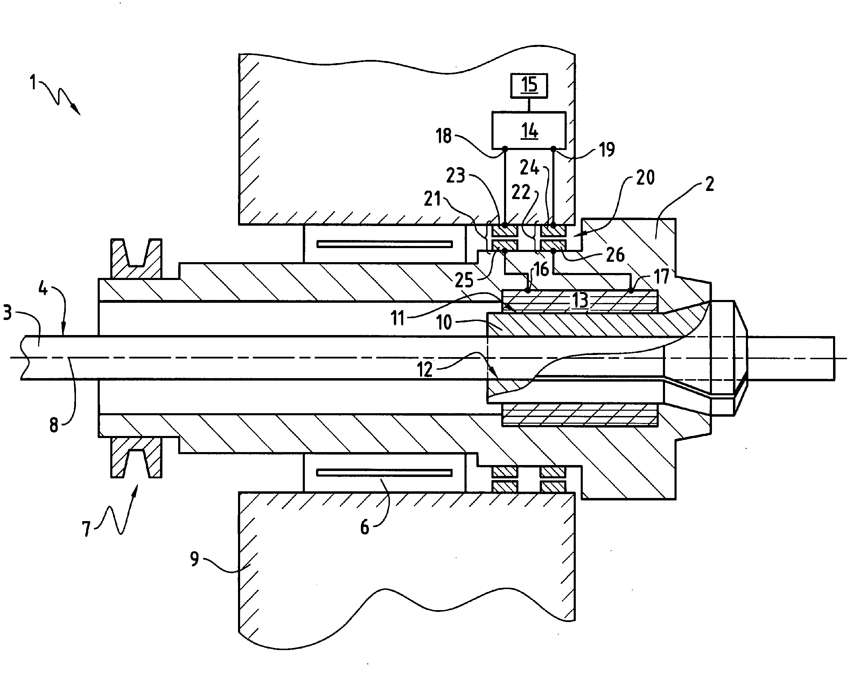

L'invention sera bien comprise à la lecture de la description ci-après faite à titre d'exemple non limitatif en regard du dessin ci-annexé qui représente schématiquement une vue en coupe longitudinale d'une broche de machine outil équipée d'un dispositif de maintien selon l'invention.

En se reportant au dessin, on voit donc une représentation schématique d'une broche 1 de machine outil (non représentée).

La broche 1 est équipée d'un dispositif de maintien 2 d'une barre 3 de matériau qui est destinée à être usinée dans la machine d'usinage.

La barre 3 de matériau consiste en un élément rigide d'une certaine longueur qui comporte une surface périphérique, dite première surface périphérique 4, cette première surface périphérique 4 définissant la section transversale de cette barre 3.

La broche 1 consiste en un ensemble mécanique qui comprend notamment, une première partie substantiellement tubulaire 5 ainsi que des moyens de guidage en rotation 6 et d'entraînement en rotation 7 de cette première partie substantiellement tubulaire autour de son axe longitudinal 8, et ce, par rapport à un support 9, tel une partie d'un bâti d'une machine que la broche équipe.

Chaque broche 1 abrite généralement un dispositif de maintien 2 de la barre 3 par serrage contre la surface périphérique dite première surface périphérique 4, ce dispositif de maintien 2 étant constitué :
- d'une deuxième partie substantiellement tubulaire 10 qui forme une pince, et
   . d'une part, comporte une surface périphérique, dite deuxième surface périphérique 11, définissant la section transversale de cette deuxième partie substantiellement tubulaire 10 et une première surface interne 12 définissant un canal axial de section transversale sensiblement égale à la section transversale de la barre 3 de matériau à usiner, et,
   . d'autre part, est radialement déformable, notamment de manière élastique,
- d'un appareil d'actionnement 13, de type commandé, conçu pour, par utilisation d'une énergie d'actionnement qui est fournie par un dispositif de commande 14 situé à l'extérieur de la première partie substantiellement tubulaire 5 de la broche 1 et est transmise à l'intérieur de cette première partie substantiellement tubulaire 5, engendrer une contraction radiale ou supprimer une contraction radiale de la deuxième partie substantiellement tubulaire 10 de manière à provoquer le serrage de cette dernière contre la première surface périphérique 4 d'une barre 3 de matériau qui la traverse, ou au contraire le desserrage de cette deuxième partie substantiellement tubulaire 10.

Tel que cela apparaît au dessin l'appareil d'actionnement 13 du dispositif de maintien 2 ne consiste pas en un vérin actionné par un fluide sous pression.

En résumé, 1, l'invention de se rapporte à un dispositif de maintien 2 d'une barre 3 de matériau dans une broche 1 de machine outil, ce dispositif de maintien mettant en oeuvre :
- une partie substantiellement tubulaire 10 dite deuxième partie substantiellement tubulaire 10 qui forme une pince destinée à être élastiquement déformée pour être fermée sur la barre 3 de matériau, et
- un appareil d'actionnement 13, de type commandé, conçu pour, engendrer une contraction radiale ou supprimer une contraction radiale de ladite deuxième partie substantiellement tubulaire 10 de manière à provoquer le serrage de cette dernière contre la première surface périphérique 4 d'une barre 3 de matériau qui la traverse, ou au contraire le desserrage de cette deuxième partie substantiellement tubulaire 10.

Le dispositif de maintien selon l'invention est remarquable en ce que l'appareil d'actionnement 13 consiste en un organe piézoélectrique.

Plus précisément, d'une manière remarquable :
- l'appareil d'actionnement 13 consiste en un organe piézoélectrique qui, par l'effet d'un courant électrique issu d'un dispositif de commande 14, peut-être placé dans au moins l'un des deux états que sont un état de repos, dit premier état, dans lequel il occupe un premier volume déterminé et un état excité, dit deuxième état, dans lequel il occupe un deuxième volume supérieur audit premier volume,
- d'autre part, le dispositif de commande 14 consiste en un générateur électrique qui, d'une part, est électriquement relié à l'appareil d'actionnement 13 et, d'autre part, est piloté par une unité de pilotage 15 de manière à provoquer au moins l'un des deux états dits premier et deuxième de l'appareil d'actionnement.

De manière remarquable, l'appareil d'actionnement est logé dans la première partie substantiellement tubulaire 5 de la broche 1 et disposé autour de la deuxième partie substantiellement tubulaire 10 de broche 1 de manière telle que :
- lorsqu'il occupe le premier volume, il contraint au moins localement la deuxième partie substantiellement tubulaire 10 de la broche 1 et induit son application vers la première surface périphérique d'une barre qui le traverse, tandis que
- lorsqu'il occupe le deuxième volume, il ne contraint pas la deuxième partie substantiellement tubulaire 10 et relâche l'application de la deuxième partie substantiellement tubulaire 10 de la broche, vers la première surface périphérique d'une barre qui le traverse.

L'augmentation de volume de l'appareil d'actionnement est exploitée pour engendrer la fermeture de la pince.

Le dispositif de commande 14 consiste en un générateur d'impulsions piloté par une unité de pilotage 15 qui permet d'échanger de l'énergie entre le générateur et le dispositif de maintien sous la forme de charges électriques au travers d'éléments capacitifs.

De manière également remarquable :
- l'organe piézoélectrique qui constitue l'appareil d'actionnement 13 présente au moins deux bornes électriques 16, 17, dite première borne 16 et deuxième borne 17, et
- le générateur électrique qui constitue le dispositif de commande 14 présente au moins deux bornes électriques 18, 19 dites troisième borne 18 et quatrième borne 19,
- l'appareil d'actionnement 13 est alimenté en énergie électrique à travers un dispositif d'alimentation 20 de type capacitif qui comprend au moins deux capacités 21, 22 dont une première capacité 21 et une deuxième capacité 22 qui sont chacune constituée par, une paire d'électrodes annulaires 23, 24 et 25, 26 disposées l'une autour de l'autre et coaxialement à la première partie substantiellement tubulaire 5 de la broche 1,
   . les électrodes annulaires 25, 26 qui sont chacune située à l'intérieur d'une des autres électrodes 23, 24, étant dites première électrode interne 25 et deuxième électrode interne 26 et étant portées par la première partie substantiellement tubulaire 5 de la broche 1 et chacune électriquement reliée à l'une des dites première borne 16 et deuxième borne 17 de l'appareil d'actionnement 13,
   . les électrodes annulaires 23, 24 qui entourent chacune l'une des dites première électrode interne 25 et deuxième électrode interne 26 étant dites première électrode externe 23 et deuxième électrodes externe 24 et étant portées par le support 9 de la broche 1 et chacune électriquement reliée à l'une des dites troisième et quatrième bornes 18, 19 du dispositif de commande 14.

## Revendications

1. Dispositif de maintien (2) d'une barre (3) de matériau dans une broche (1) de machine outil,
ce dispositif de maintien mettant en oeuvre une partie substantiellement tubulaire (10) dite deuxième partie substantiellement tubulaire (10) qui forme une pince destinée à être élastiquement déformée pour être fermée sur la barre (3) de matériau, et un appareil d'actionnement (13), de type commandé, conçu pour, engendrer une contraction radiale ou supprimer une contraction radiale de ladite deuxième partie substantiellement tubulaire (10) de manière à provoquer le serrage de cette dernière contre la première surface périphérique (4) d'une barre (3) de matériau qui la traverse, ou au contraire le desserrage de cette deuxième partie substantiellement tubulaire (10),
- la broche (1),
. consistant en un ensemble mécanique qui comprend notamment, une première partie substantiellement tubulaire (5) ainsi que des moyens de guidage en rotation (6) et d'entraînement en rotation (7) de cette première partie substantiellement tubulaire (5) autour de son axe longitudinal (8), et ce, par rapport à un support (9),
. abritant un dispositif de maintien (2) de la barre (3) par serrage contre sa surface périphérique dite première surface périphérique (4),
- l'appareil d'actionnement (13),
. consistant en un organe piézoélectrique qui, par l'effet d'un courant électrique issu d'un dispositif de commande (14), peut-être placé dans au moins l'un des deux états que sont un état de repos, dit premier état, dans lequel il occupe un premier volume déterminé et un état excité, dit deuxième état, dans lequel il occupe un deuxième volume supérieur audit premier volume,
. étant situé dans la première partie substantiellement tubulaire (5) de la broche (1) et disposé autour de la deuxième partie substantiellement tubulaire (10) de broche (1) de manière telle que :
.. lorsqu'il occupe le premier volume, il contraint au moins localement la deuxième partie substantiellement tubulaire (10) de la broche (1) et induit son application vers la première surface périphérique d'une barre qui le traverse, tandis que
lorsqu'il occupe le deuxième volume, il ne contraint pas la deuxième partie substantiellement tubulaire (10) et relâche l'application de la deuxième partie substantiellement tubulaire (10) de la broche (1), vers la première surface périphérique d'une barre (3) qui le traverse,
ce dispositif de maintien étant **caractérisé en ce que** le dispositif de commande (14) consiste en un générateur d'impulsions piloté par une unité de pilotage (15) qui permet d'échanger de l'énergie entre le générateur et le dispositif de maintien sous la forme de charges électriques au travers d'éléments capacitifs.

2. Dispositif de maintien selon la revendication 1, **caractérisé en ce que** :
- l'organe piézoélectrique qui constitue l'appareil d'actionnement (13) présente au moins deux bornes électriques (16, 17), dite première borne (16) et deuxième borne (17), et
- le générateur électrique qui constitue le dispositif de commande (14) présente au moins deux bornes électriques (18, 19) dites troisième borne (18) et quatrième borne (19),
- l'appareil d'actionnement (13) est alimenté en énergie électrique à travers un dispositif d'alimentation (20) de type capacitif qui comprend au moins deux capacités (21, 22) dont une première capacité (21) et une deuxième capacité (22) qui sont chacune constituée par, une paire d'électrodes annulaires (23, 24 et 25, 26) disposées l'une autour de l'autre et coaxialement à la première partie substantiellement tubulaire (5) de la broche (1),
. les électrodes annulaires (25, 26) qui sont chacune située à l'intérieur d'une des autres électrodes (23, 24), étant dites première électrode interne (25) et deuxième électrode interne (26) et étant portées par la première partie substantiellement tubulaire (5) de la broche (1) et chacune électriquement reliée à l'une des dites première borne (16) et deuxième borne (17) de l'appareil d'actionnement (13), .
. les électrodes annulaires (23, 24) qui entourent chacune l'une des dites première électrode interne (25) et deuxième électrode interne (26) étant dites première électrode externe (23) et deuxième électrodes externe (24) et étant portées par le support (9) de la broche (1) et chacune électriquement reliée à l'une des dites troisième et quatrième bornes (18, 19) du dispositif de commande (14).

3. Machines outils équipées du dispositif de maintien selon l'une des revendications 1 ou 2.

## Claims

1. Device for holding (2) a bar (3) of material in a machine tool spindle (1),
this holding device implementing a substantially tubular part (10) referred to as second substantially tubular part (10) which forms a chuck intended to be elastically deformed to be closed on the bar (3) of material, and an actuating device (13), of controlled type, conceived for generating a radial contraction or eliminating a radial contraction of said second substantially tubular part (10) in such a way as to cause the clamping of the latter against the first peripheral surface (4) of a bar (3) of material which traverses it, or, on the contrary, the unclamping of this second substantially tubular part (10),
- the spindle (1),
consisting of a mechanical assembly which comprises in particular a first substantially tubular part (5) as well as means of guiding in rotation (6) and of driving in rotation (7) this first substantially tubular part (5) about its longitudinal axis (8), and this in relation to a support (9),
. accommodating a device for holding (2) of the bar (3) by clamping against its peripheral surface referred to as first peripheral surface (4),
- the actuating device (13),
consisting of a piezoelectric element, which, through the effect of an electric current emanating from a control device (14), can be put in at least one of two states which are a state of rest, referred to as first state, in which it occupies a first predetermined volume, and an excited state, referred to as second state, in which it occupies a second volume greater than said first volume,
. being situated in the first substantially tubular part (5) of the spindle (1) and disposed about the second substantially tubular part (10) of the spindle (1) in such a way that :
.. when it occupies the first volume, it constrains at least locally the second substantially tubular part (10) of the spindle (1) and induces its application towards the first peripheral surface of a bar which traverses it, whereas
.. when it occupies the second volume, it does not constrain the second substantially tubular part (10) and releases the application of the second substantially tubular part (10) of the spindle (1), towards the first peripheral surface of a bar (3) which traverses it,
this holding device being **characterised in that** the control device (14) consists of a pulse generator driven by a pilot unit (15) which allows energy to be exchanged between the generator and the holding device in the form of electrical loads through capacitive elements.

2. Holding device according to claim 1, **characterised in that**:
- the piezoelectric element which constitutes the actuating device (13) has at least two electric terminals (16, 17), referred to as first terminal (16) and second terminal (17), and
- the electric generator which constitutes the control device (14) has at least two electric terminals (18, 19) referred to as third terminal (18) and fourth terminal (19),
- the actuating device (13) is fed with electric energy through a feed device (20) of capacitive type which comprises at least two capacitors (21, 22), being a first capacitor (21) and a second capacitor (22) which are each made up of a pair of annular electrodes (23, 24 and 25, 26) disposed one around the other and coaxially to the first substantially tubular part (5) of the spindle (1),
. the annular electrodes (25, 26) which are each situated inside one of the other electrodes (23, 24), being referred to as first internal electrode (25) and second internal electrode (26) and being borne by the first substantially tubular part (5) of the spindle (1) and each electrically connected to one of said first terminal (16) and second terminal (17) of the actuating device (13),
. the annular electrodes (23, 24) which each surround one of said first internal electrode (25) and second internal electrode (26) being referred to as first external electrode (23) and second external electrodes (24) and being borne by the support (9) of the spindle (1) and each electrically connected to one of said third and fourth terminals (18, 19) of the control device (14).

3. Machine tools equipped with the holding device according to one of the claims 1 or 2.

## Patentansprüche

1. Haltevorrichtung (2) für eine Werkstoffstange (3) in einer Werkzeugmaschinenspindel (1),
wobei diese Haltevorrichtung einen im Wesentlichen rohrförmigen Teil (10) benutzt, den sogenannten zweiten, im Wesentlichen rohrförmigen Teil (10), der eine Spannzange bildet, die dazu bestimmt ist, elastisch verformt zu werden, um die Werkstoffstange (3) zu umschliessen, und ein gesteuertes Betätigungsgerät (13) benutzt, dass dazu entwickelt wurde, ein radiale Klammerung des genannten zweiten, im Wesentlichen rohrförmigen Teils (10) zu erzeugen oder eine radiale Klammerung zu lösen, so dass das Festspannen dieses Letzteren auf der ersten Umfangsfläche (4) einer ihn durchquerenden Werkstoffstange (3), oder umgekehrt, das Lösen dieses zweiten, im Wesentlichen rohrförmigen Teils (10) bewirkt wird,
- wobei die Spindel (1)
. aus einer mechanischen Baugruppe besteht, die insbesondere einen ersten, im Wesentlichen rohrförmigen Teil (5) sowie Mittel zur Führung der Drehbewegung (6) und zum drehenden Antrieb (7) dieses ersten, im Wesentlichen rohrförmigen Teils (5) um seine Längsachse (8) aufweist, und dies bezogen auf eine Halterung (9),
. eine Vorrichtung zum Halten (2) der Stange (3) mittels Festspannen auf ihrer Umfangsfläche, der sogenannten ersten Umfangsfläche (4), birgt,
- wobei das Betätigungsgerät (13)
. aus einem piezoelektrischen Organ besteht, das durch Einwirkung eines aus einer Steuervorrichtung (14) kommenden, elektrischen Stroms mindestens in einen von zwei Zuständen versetzt werden kann, nämlich in einen Ruhezustand, den sogenannten ersten Zustand, in dem es ein erstes vorgegebenes Volumen einnimmt, und in einen erregten Zustand, den sogenannten zweiten Zustand, in dem es ein zweites Volumen einnimmt, das grösser als das genannte erste Volumen ist,
. sich im ersten, im Wesentlichen rohrförmigen Teil (5) der Spindel (1) befindet und so um den zweiten, im Wesentlichen rohrförmigen Teil (10) der Spindel (1) angeordnet ist, dass es,
.. wenn es das erste Volumen ausfüllt, zumindest stellenweise den zweiten, im Wesentlichen rohrförmigen Teil (10) der Spindel (1) spannt und zu seinem Andruck auf der ersten Umfangsfläche einer ihn durchquerenden Stange führt, während
.. wenn es das zweite Volumen ausfüllt, den zweiten, im Wesentlichen rohrförmigen Teil (10) nicht spannt und den Andruck des zweiten, im Wesentlichen rohrförmigen Teils (10) der Spindel (1) auf der ersten Umfangsfläche einer ihn durchquerenden Stange (3) löst,
wobei diese Haltevorrichtung **dadurch gekennzeichnet ist, dass** die Steuervorrichtung (14) aus einem Taktgeber besteht, der von einer Steuereinheit (15) gesteuert wird, die es gestattet, Energie zwischen dem Taktgeber und der Haltevorrichtung in Form von elektrischen Ladungen über kapazitive Bauteile auszutauschen.

2. Haltevorrichtung nach Anspruch 1, **dadurch gekennzeichnet, dass**:
- das piezoelektrische Organ, welches das Betätigungsgerät (13) bildet, mindestens zwei elektrische Klemmen (16, 17), die sogenannte erste Klemme (16) und zweite Klemme (17) aufweist, und
- der elektrische Taktgeber, der die Steuervorrichtung (14) bildet, mindestens zwei elektrische Klemmen (18, 19), die sogenannte dritte Klemme (18) und vierte Klemme (19) aufweist,
- das Betätigungsgerät (13) über eine kapazitive Spannungsversorgungs-vorrichtung (20) mit elektrischer Energie versorgt wird, die mindestens über zwei Kapazitäten (21, 22), darunter eine erste Kapazität (21) und eine zweite Kapazität (22) verfügt, von denen jede durch ein Paar Ringelektroden (23, 24 und 25, 26) gebildet wird, welche eine um die andere und koaxial zum ersten, im Wesentlichen rohrförmigen Teil (5) der Spindel (1) angeordnet sind,
. die Ringelektroden (25, 26), von denen sich jede im Inneren einer der anderen Elektroden (23, 24), befindet, und die als erste Innenelektrode (25) und zweite Innenelektrode (26) bezeichnet werden, die vom ersten, im Wesentlichen rohrförmigen Teil (5) der Spindel (1) gehalten werden und von denen jede elektrisch mit einer der genannten ersten Klemme (16) und zweiten Klemme (17) des Betätigungsgeräts (13) verbunden ist,
. die Ringelektroden (23, 24), von denen jede eine der genannten ersten Innenelektrode (25) und zweiten Innenelektrode (26) umgibt, und die als erste Aussenelektrode (23) und zweite Aussenelektrode (24) bezeichnet werden, die von der Halterung (9) der Spindel (1) gehalten werden und von denen jede elektrisch mit einer der genannten dritten und vierten Klemme (18, 19) des Steuergeräts (14) verbunden ist.

3. Werkzeugmaschinen, die mit einer Haltevorrichtung nach einem der Ansprüche 1 oder 2 ausgerüstet sind.
